# EUROPÄISCHE PATENTSCHRIFT

(11) **EP 2 666 618 B1**
(45) Veröffentlichungstag und Bekanntmachung des Hinweises auf die Patenterteilung: **13.01.2016**
(21) Anmeldenummer: 12401103.2
(22) Anmeldetag: 24.05.2012
(51) Int. Cl.: B29C 73/04, E04G 19/00, B29C 73/30, B29C 73/26, B29C 35/08

(54) **Reparaturverfahren für eine Betonschalplatte**
Repair method for a concrete shell panel
Procédé de réparation pour un panneau de coffrage en béton

(43) Veröffentlichungstag der Anmeldung: 27.11.2013
(73) Patentinhaber: alkus GmbH & Co. KG, 09111 Chemnitz (DE)
(72) Erfinder: Steyer, Claus, 09599 Freiberg (DE)
(74) Vertreter: Späth, Dieter

(56) Entgegenhaltungen:
- EP-A2- 1 275 796
- EP-A2- 1 857 611
- DE-A1- 2 146 057
- DE-A1- 10 114 161
- DE-A1- 10 310 606
- DE-A1-102006 006 408
- JP-A- 8 312 132

## Beschreibung

Die Erfindung betrifft ein Verfahren zur Reparatur einer Schalfläche einer Schalplatte für Beton mit den Merkmalen des Oberbegriffs des Anspruchs 1.

Als Schalfläche wird die Oberfläche der Schalplatte bezeichnet, die beim Betonieren mit Beton in Berührung kommt. In Gebrauch wird die Schalfläche beschädigt, sie erhält Kratzer, Dellen und dgl. Ein Ausbessern durch Spachteln ist aufwendig.

Die Offenlegungsschrift DE 101 14 161 A1 offenbart ein Verfahren zur Reparatur einer Schalplatte, auf die eine Folie mit einem deaktivierbaren Kleber geklebt ist. Zur Reparatur wird die Schalplatte auf der Seite, auf die die Folie geklebt ist, erwärmt, um den Klebstoff zu deaktivieren, und die Folie wird von der Schalplatte gezogen. Anschließend wird die Schalplatte von Klebstoffresten gereinigt und danach wird eine neue Folie aufgeklebt.

Ein vergleichbares Verfahren offenbart die Patentanmeldung EP 1 714 782 A1.

Das Erwärmen zum Deaktivieren des Klebstoffs und das Abziehen der Folie von der Schalplatte erfordert einen erheblichen maschinellen Aufwand.

Die Patentanmeldung EP 1 857 611 A2 offenbart ein Verfahren zur Reparatur einer Schalplatte, die eine thermisch schmelzbare Folie als Oberflächenbeschichtung aufweist, deren äußere Oberfläche eine Schalfläche der Schalplatte bildet, die beim Betonieren mit Beton in Berührung kommt. Zur Reparatur wird die Folie teilweise abgefräst, so dass lediglich ein Rest der Folie als Beschichtung auf der Schalplatte verbleibt, anschließend wird eine neue Deckfolie auf den Rest der ursprünglichen Folie durch Schweißen aufgebracht.

Aufgabe der Erfindung ist ein vereinfachtes und schnelleres Verfahren zur Reparatur einer Schalfläche einer Schalplatte für Beton vorzuschlagen.

Diese Aufgabe wird erfindungsgemäß durch die Merkmale des Anspruchs 1 gelöst. Die Erfindung schlägt vor, eine Folie stoffschlüssig auf eine Schalfläche einer Schalplatte aufzubringen ohne vorher die Schalfläche von der Schalplatte zu entfernen. Es wird also die Folie ohne Weiteres auf die Schalfläche der Schalplatte aufgebracht. Eventuell kann die Schalfläche geglättet, d. h. etwaige Überstände, Erhebungen, Grate usw. entfernt werden. Denkbar ist auch, Vertiefungen in der Schalfläche der Schalplatte beispielsweise durch Spachteln auszufüllen, was aber wegen des Aufwands vorzugsweise vermieden wird. Es wird weder eine Folie oder dgl. von der Schalplatte entfernt noch die Schalfläche durch mechanische Bearbeitung wie Fräsen oder Schleifen, oder durch thermische oder chemische Bearbeitung, von der Schalplatte entfernt, bevor die Folie aufgebracht wird. Die auf die Schalplatte aufgebrachte Folie bildet eine neue Schalfläche der Schalplatte, die einfach auch nur als Schalfläche bezeichnet werden kann. Zur Unterscheidung kann die Schalfläche der Schalplatte, auf die die Folie aufgebracht ist, als ursprüngliche Schalfläche bezeichnet werden.

Die Erfindung schlägt ein einfaches und schnelles Reparaturverfahren vor. Es kann mehrfach, beispielsweise zwei bis dreimal, an einer Schalplatte ausgeführt werden, d. h. auf eine auf die Schalplatte aufgebrachte Folie wird eine weitere Folie aufgebracht. Die zusätzliche Dicke der Schalplatte durch die aufgebrachte Folie, die eine Dicke beispielsweise zwischen 2/10 mm bis 55/100 mm aufweist, stört nicht.

Eine bevorzugte Ausgestaltung der Erfindung sieht eine Reparatur der Schalfläche eines Rahmenschalelements vor, das einen, meist metallischen, Rahmen zur Versteifung und eine Schalplatte aufweist. Zur Reparatur der Schalfläche wird wie vorstehend erläutert eine Folie stoffschlüssig auf die Schalplatte aufgebracht, ohne vorher die Schalfläche zu entfernen. Dabei bleibt erfindungsgemäß die Schalplatte im Rahmen, wodurch sich der Reparaturaufwand erheblich verringert. Ein Aus- und Wiedereinbau einer Schalplatte an oder in einen Rahmen ist wirtschaftlich oft zu aufwendig für eine Reparatur. Ein Vorteil des erfindungsgemäßen Verfahrens ist, dass es die Reparatur der Schalfläche einer Schalplatte in einem Rahmen eines Rahmenschalelements ermöglicht, ohne die Schalplatte ausbauen zu müssen.

Eine Ausgestaltung der Erfindung sieht vor, die Folie in Vakuum bzw. mit Vakuum zwischen der Folie und der Schalplatte auf die Schalplatte aufzubringen, wodurch Lufteinschlüsse zwischen der Folie und der Schalplatte vermieden werden. Dabei ist unter einem Vakuum ein niedriger Druck von beispielsweise 200 mbar zu verstehen, d. h. beispielsweise ein 20 %-Vakuum oder technisch gesehen ein Grobvakuum im Bereich von etwa 300 bis 1 mbar. Das Aufbringen der Folie mit Hilfe von Vakuum ggf. unter Druckbeaufschlagung der Folie auf einer Außenseite ermöglicht ein Anformen und Andrücken der Folie an nahezu beliebig geformte Oberflächen, beispielsweise an ein- oder zweidimensional gekrümmte Flächen oder Freiformflächen.

Ein Andrücken der Folie an die Schalplatte zum Aufbringen auf die Schalplatte erfolgt gemäß einer Weiterbildung der Erfindung unter Druckeinwirkung insbesondere mit einem Umgebungsdruck auf einer der Schalplatte abgewandten Seite der Folie. Diese Ausgestaltung der Erfindung vereinfacht das Aufbringen und Andrücken der Folie auf die Schalplatte, weil die Folie auch bei Unebenheiten gleichmäßig auf der gesamten Fläche gegen die Schalplatte gedrückt wird. Es sind weder ein präzise geführter und auf die Schalplatte ausgerichteter Presstempel noch eine Abstützung der Schalplatte auf ihrer gesamten Fläche notwendig. Weil eine Druckdifferenz zwischen einem Vakuum auf der der Schalplatte zugewandten und dem Umgebungsdruck auf der der Schalplatte abgewandten Seite der Folie begrenzt ist kann auch ein Überdruck, d. h. ein höherer Druck als Umgebungsdruck, auf der der Schalplatte abgewandten Seite auf die Folie ausgeübt werden. Das erfordert allerdings ein druckfestes Behältnis. Zum Evakuieren sieht eine Ausgestaltung der Erfindung eine Membran vor, beispielsweise ein Tuch oder eine Folie, die auf der Folie angeordnet wird. Unter einer Membran ist ein flächenförmiges, dünnes, vorzugsweise biegeschlaffes Element zu verstehen, dessen Dicke vernachlässigbar im Verhältnis zu Länge und Breite ist. Die Membran kann auf Zug unelastisch oder elastisch dehnbar sein. Die Membran kann beispielsweise hermetisch dicht in einem Rahmen angeordnet sein um das Evakuieren und die Druckbeaufschlagung zu ermöglichen. Die Membran erleichtert die Erzeugung eines Vakuums zwischen der Folie bzw. der Membran und der Schalplatte und die Druckbeaufschlagung auf der der Schalplatte abgewandten Seite der Folie bzw. Membran. Die Membran passt sich Unebenheiten an, beispielsweise auch Versatz zwischen der Schalfläche und einem Rahmen eines Schalelements, dessen schalflächenseitige Oberfläche nicht bündig mit der Schalfläche der Schalplatte ist. Die Folie wird überall mit dem gleichen Anpressdruck auf die Schalfläche gedrückt. Als biegeschlaffes Element passt sich die Membran an beispielsweise konvexe, konkave oder sonstige freigeformte Schalflächen an und drückt die Folie auf der gesamten Schalfläche gleichmäßig an.

Die Membran kann heizbar, insbesondere elektrisch heizbar sein, um die Folie auf die Schmelztemperatur zu erwärmen. Zum Zwecke der elektrischen Heizbarkeit kann die Membran aus einem elektrisch leitfähigen Kunststoff bestehen, sie kann Heizdrähte aufweisen oder mit einer elektrisch leitfähigen Beschichtung versehen sein. Eine solche Beschichtung kann aufgedampft oder galvanisch abgeschieden sein. Die Aufzählungen sind beispielhaft und nicht abschließend. Eine Erwärmung der Folie zum Aufschweißen auf die Schalplatte kann auch mit anderen Wärmequellen erfolgen.

Es ist möglich, die Folie vorzuheizen, d. h. vor dem Auflegen auf die Schalplatte zu erwärmen. Dadurch verkürzt sich eine Zeit, während der Wärme auf die Schalplatte einwirkt und ein Wärmeeintrag in die Schalplatte verringert sich. Die Gefahr einer Delamination, wenn die Schalplatte eine Schichtverbundplatte ist, und eines Wärmeverzugs der Schalplatte, verkleinern sich. Denkbar ist, dass die Folie nur vor dem Auflegen auf die Schalplatte erwärmt wird oder dass die Folie und durch sie auch die Schalplatte nach dem Auflegen weiter erwärmt wird.

Eine Ausgestaltung der Erfindung sieht das Aufbringen der Folie oder von Folienstücken auf einer oder mehreren Teilflächen der Schalfläche vor. Es wird eine Folie oder werden mehrere Folien in Bereichen der Schalfläche aufgebracht, die Beschädigungen aufweisen.

Vorzugsweise wird die Folie nicht um eine Kante umgelegt, wodurch ein Wulst an der Umlegestelle durch das Umlegen der Folie vermieden wird.

Eine Ausgestaltung der Erfindung sieht ein Verschweißen der Folie mit der Schalplatte vor. Zu diesem Zweck bestehen die Schalplatte und die Folie aus Kunststoffen mit gleichen oder ungefähr gleichen Schmelztemperaturen, um die Schalfläche der Schalplatte und die Folie zum Schweißen gemeinsam anschmelzen zu können. Mit ungefähr gleichen Schmelztemperaturen ist gemeint, dass die Folie und die Schalfläche der Schalplatte durch Wärmeeinwirkung gemeinsam angeschmolzen werden können und weder die Folie oder die Schalfläche der Schalplatte fest bleiben noch flüssig werden oder sich auflösen. Insbesondere bestehen die Schalplatte und die Folie aus dem gleichen Kunststoff.

Um eine Delamination der Schalplatte zu vermeiden, wenn die Schalplatte eine Schichtverbundplatte ist, kann die Folie auch aus einem Kunststoff mit niedrigerer Schmelztemperatur als die Schalplatte oder eine eventuell bereits auf die Schalplatte aufgebrachte Folie bestehen.

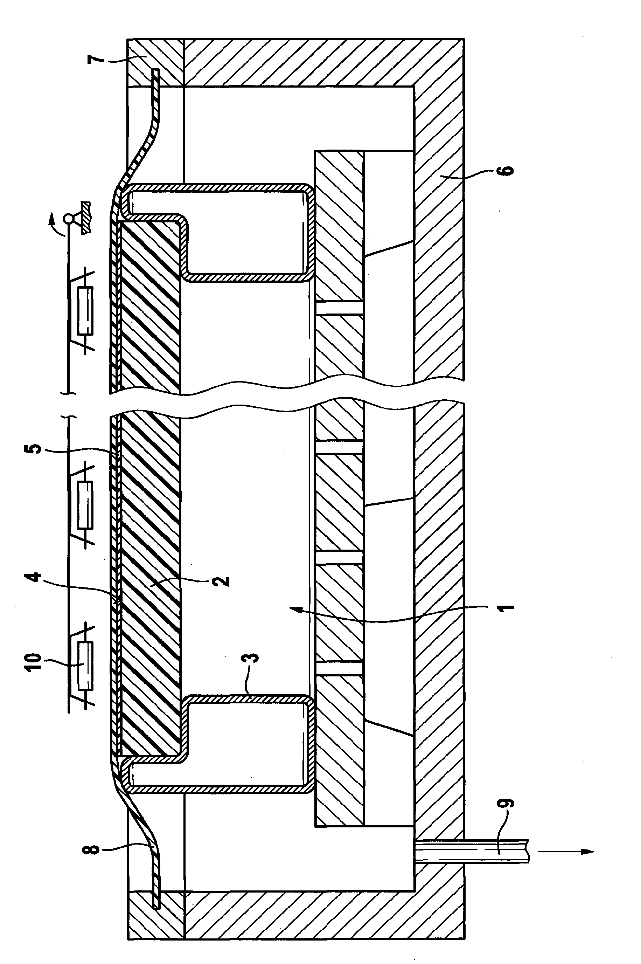

Die Erfindung wird nachfolgend anhand eines in der Zeichnung dargestellten Ausführungsbeispiels näher erläutert. Die einzige Figur zeigt eine schematisierte und vereinfachte Schnittdarstellung des erfindungsgemäßen Verfahrens.

Die Zeichnung zeigt ein Rahmenschalelement 1 zum Schalen von Beton, das eine Schalplatte 2 und einen metallischen Rahmen 3 aufweist, in dem die Schalplatte 2 angeordnet ist und der die Schalplatte 2 versteift. Die Schalplatte 2 besteht beispielsweise aus Polypropylen, sie kann geschäumt oder nichtgeschäumt sein. Möglich ist beispielsweise auch eine Schichtverbundplatte und/oder eine Schalplatte 2 mit Verstärkungen. Als Schalfläche 4 wird hier eine Oberfläche der Schalplatte 2 bezeichnet, die beim Betonieren mit Beton in Berührung kommt. Die Schalfläche 4 ist bündig mit dem Rahmen 3. Sie weist durch Gebrauch Vertiefungen wie Kratzer oder Dellen auf, die in der Zeichnung nicht dargestellt sind.

Zur Reparatur der Schalfläche 4 wird eine Folie 5 auf die Schalplatte 2 gelegt und stoffschlüssig vollflächig mit der Schalplatte 2 verbunden. Im Ausführungsbeispiel wird die Folie 5 mit der Schalplatte 2 verschweißt. Die Folie 5 gleicht Unebenheiten aus und überdeckt die Kratzer und anderen Vertiefungen in der Schalfläche 4. Erhebungen, Überstände, beispielsweise Grate an Rändern von Kratzern, können vor dem Aufbringen der Folie 5 von der Schalfläche 4 der Schalplatte 2 entfernt werden. Vor dem Auflegen der Folie 5 wird die Schalfläche 4 gereinigt und es werden Betonreste entfernt. Ansonsten wird die Schalplatte 2 nicht behandelt oder bearbeitet.

Die Folie 5 weist die gleiche oder eine ungefähr gleiche Schmelztemperatur wie die Schalplatte 2 auf, im Ausführungsbeispiel besteht die Folie 5 aus dem gleichen Kunststoff wie die Schalplatte 2, so dass sich die Folie 5 gut mit der Schalplatte 2 verschweißen lässt.

Die Folie 5 ist nicht größer als die Schalplatte 2, die Folie 5 steht nicht seitlich über die Schalplatte 2 über, die Folie 5 kann kleiner sein als die Schalplatte 2. Denkbar ist auch, dass die Folie 5 größer ist als die Schalplatte 2, und einen Spalt zwischen der Schalplatte 2 und dem Rahmen 3 überbrückt und bis auf den Rahmen 3 reicht (nicht dargestellt). Jedenfalls wird die Folie 5 nicht seitlich über Kanten der Schalplatte 2 oder des Rahmens 3 umgelegt um Wulste durch ein Umlegen zu vermeiden. Es können auch eine oder mehrere Folien 5, die kleiner sind als die Schalplatte 2, auf Bereiche der Schalplatte 2 aufgebracht werden, die Beschädigungen aufweisen. Es ist nicht notwendig, dass die Folie 5 unbeschädigte Teile der Schalfläche 4 bedeckt. Die Folie 5 hat eine Dicke von 0,55 mm. Die Folie 5 ist so dünn, dass ihre zusätzliche Dicke auf der Schalplatte 2 beim Betonieren nicht stört. Das Reparaturverfahren kann mehrfach, beispielsweise zwei bis dreimal, durchgeführt werden, d. h. es werden weitere Folien auf die auf die Schalplatte 2 aufgebrachte Folie 5 aufgebracht, wenn die Folie 5 beim Gebrauch des Rahmenschalelements 1 beschädigt worden ist.

Um Lufteinschlüsse zwischen der Folie 5 und der Schalplatte 2 zu vermeiden, wird die Folie 5 in einem Vakuum auf die Schalplatte 2 aufgelegt, wobei ein Druck von beispielsweise 0,2 bar, d.h. ein zwanzigprozentiges Vakuum genügt. Zum Evakuieren wird das Rahmenschalelement 1 mit der auf der Schalplatte 2 aufliegenden Folie 5 in eine Evakuierschale 6 gelegt und eine Membran 8, beispielsweise ein Silikontuch, auf das Rahmenschalelement 1 aufgelegt. Die Membran 8 ist in einem Rahmen 7 befestigt, der auf die Evakuierschale 6 aufgelegt wird. Die Membran 8 liegt auf dem Rahmen 3 des Rahmenschalelements 1 und auf der Folie 5 auf, die Ihrerseits auf der Schalfläche 4 der Schalplatte 2 aufliegt. Durch einen Evakuieranschluss 9 der Evakuierschale 6 wird außerhalb und innerhalb des Rahmens 3 des Rahmenschalelements 1 auf einer Unterseite der Membran 8 evakuiert um die Folie 5 ohne Lufteinschlüsse auf die Schalplatte 2 aufzulegen und mit dem Luftdruck, der über der Membran 8 herrscht, gegen die Schalplatte 2 zu drücken. Beispielsweise mit Infrarotstrahlern 10 wird die Folie 5 auf eine Schmelztemperatur oder weniger erwärmt, so dass sie anschmiltz. Mit der Folie 5 wird auch die Schalfläche 4 auf Schmelztemperatur oder weniger erwärmt. Durch das Andrücken mit dem Luftdruck und das Erwärmen verbindet sich die Folie 5 stoffschlüssig mit der Schalplatte 2, die Folie 5 verschweißt mit der Schalplatte 2.

Auch wenn der Rahmen 3 nicht bündig mit der Schalfläche 4 ist, legt sich die Membran 8 an und drückt die Folie 5 durch den Luftdruck auf der einen- und das Vakuum auf der anderen Seite auf der gesamten Fläche gleichmäßig an. Mit der Membran 8 lässt sich die Folie 5 auch auf konvexe, konkave und sonstige freigeformte Schalflächen 4 aufbringen.

Die Membran 8 weist eine höhere Schmelztemperatur auf als die Folie 5 und die Schalplatte 2, sie wird nicht auf ihre Schmelztemperatur erwärmt. Die Folie 5 kann auch eine niedriger Schmelztemperatur aufweisen als die Schalplatte 2 oder eine etwaige, bereits auf die Schalplatte 2 aufgebrachte Folie. Das vermeidet eine Delamination der Schalplatte 2, wenn sie eine Schichtverbundplatte ist. Allerdings kann in diesem Fall die Folie 5 nicht aus dem gleichen Kunststoff bestehen wie die Schalplatte 2. Eine weitere Möglichkeit, einer Delamination der Schalplatte 2 entgegenzuwirken ist, die Folie 5 vor dem Auflegen auf die Schalplatte 2 zu erwärmen. Auf der Schalplatte 2 wird die Folie 5 in diesem Fall entweder nicht weiter erwärmt oder sie wird weiter erwärmt, wobei sie die Schalfläche 4 mit wärmt. In beiden Fällen ist ein Wärmeeintrag in die Schalplatte 2 kleiner und die Wärmeeinwirkung auf die Schalplatte 2 kürzer, wodurch die Gefahr einer Delamination und eines Wärmeverzugs der Schalplatte 2 kleiner sind.

Die Membran 8 kann heizbar sein, beispielsweise elektrisch, um die Folie 5 mit der Schalfläche 4 zu verschweißen. Die Infrarotstrahler 10 sind in diesem Fall nicht notwendig. Zum Zwecke der Heizbarkeit kann die Membran aus einem elektrisch leitfähigen Kunststoff bestehen, elektrische Heizdrähte aufweisen oder mit einer elektrisch leitfähigen Schicht versehen, beispielsweise metallbedampft oder in anderer Weise Metallkaschiert sein. Die Aufzählung der Heizmöglichkeiten der Membran 8 ist beispielhaft und nicht abschliessend.

Um den Anpressdruck der Folie 5 gegen die Schalplatte 2 zu erhöhen kann das Rahmenschalelement 1 zum Aufbringen der Folie 5 in eine nicht dargestellte, schließbare Kammer eingebracht werden, die das beschriebene Evakuieren auf der Unterseite der Membran 8 und eine Druckbeaufschlagung auf der Oberseite der Membran 8 ermöglicht.

Die Folie 5 wird auch bei etwaigen Unebenheiten der Schalfläche 4 gleichmäßig auf ihrer gesamten Fläche auf die Schalplatte 2 gedrückt, so dass die Folie 5 vollflächig mit der Schalfläche 4 der Schalplatte 2 verschweißt. Nach oder schon während des Belüftens werden die Infrarotstrahler 12 abgeschaltet. Weil die Infrarotstrahler 10 nach dem Abschalten nachheizen, lassen sie sich vom Rahmenschalelement 1 wegbewegen. In der Zeichnung ist das durch ein schematisches Schwenkgelenk dargestellt. Die Evakuierschale 6 wird belüftet, wenn die Folie 5 und die Schalfläche 4 der Schalplatte 2 soweit abgekühlt sind, dass die Verschweißung der Folie 5 mit der Schalfläche 4 der Schalplatte 2 ausreichend fest ist. Nach dem Belüften wird das Rahmenschalelement 1 entnommen. Durch die aufgeschweißte Folie 5 ist die Schalfläche 4 der Schalplatte 2 repariert. Die Folie 5 überspannt Kratzer und sonstige Vertiefungen. Auch wenn sich die Folie 5 in breite Vertiefungen hineinwölbt, d. h. Unebenheiten aufweist, sind die Vertiefungen ausgebessert und die Schalfläche 4 ist wieder glatt oder jedenfalls glatter als vor der Reparatur, das Rahmenschalelement 1 ist wieder verwendbar.

## Patentansprüche

1. Verfahren zur Reparatur einer Schalfläche (4) einer Schalplatte (2) für Beton, **dadurch gekennzeichnet, dass** auf die ursprüngliche Schalfläche (4) der Schalplatte (2) eine Folie (5) stoffschlüssig aufgebracht wird, die eine neue Schalfläche bildet.

2. Verfahren nach Anspruch 1, **dadurch gekennzeichnet, dass** die Schalplatte (2) Bestandteil eines Rahmenschalelements (1) mit einem Rahmen (3) und der Schalplatte (2) ist und dass die Schalplatte (2) zur Reparatur ihrer Schalfläche (4) im Rahmen (3) bleibt.

3. Verfahren nach Anspruch 1, **dadurch gekennzeichnet, dass** die Folie (5) in Vakuum oder mit Vakuum zwischen der Folie (5) und der Schalplatte (2) auf die Schalplatte (2) aufgebracht wird.

4. Verfahren nach Anspruch 3, **dadurch gekennzeichnet, dass** die Folie (5) unter Druckeinwirkung auf einer der Schalplatte (2) abgewandten Seite auf die Schalplatte (2) aufgebracht wird.

5. Verfahren nach Anspruch 3 oder 4, **dadurch gekennzeichnet, dass** eine Membran (8) auf einer der Schalplatte (2) abgewandten Seite der Folie (5) auf der Folie (5) angeordnet wird, zwischen der und der Schalplatte (2) evakuiert wird.

6. Verfahren nach Anspruch 5, **dadurch gekennzeichnet, dass** die Membran (8) heizbar ist.

7. Verfahren nach einem der vorhergehenden Ansprüche, **dadurch gekennzeichnet, dass** die Folie (5) vor einem Auflegen auf die Schalfläche (4) erwärmt wird.

8. Verfahren nach einem der vorhergehenden Ansprüche, **dadurch gekennzeichnet, dass** die Folie (5) auf einem Teil der Schalfläche (4) aufgebracht wird.

9. Verfahren nach einem der vorhergehenden Ansprüche, **dadurch gekennzeichnet, dass** die Folie (5) nicht um eine Kante umgelegt wird.

10. Verfahren nach einem der vorhergehenden Ansprüche, **dadurch gekennzeichnet, dass** die Folie (5) mit der Schalplatte (2) verschweißt wird.

11. Verfahren nach einem der vorhergehenden Ansprüche, **dadurch gekennzeichnet, dass** die Schalplatte (2) und die Folie (5) aus Kunststoffen mit gleichen Schmelztemperaturen bestehen.

12. Verfahren nach Anspruch 11, **dadurch gekennzeichnet, dass** die Schalplatte (2) und die Folie (5) aus dem gleichen Kunststoff bestehen.

13. Verfahren nach einem der Ansprüche 1 bis 10, **dadurch gekennzeichnet, dass** die Folie (5) eine niedrigere Schmelztemperatur aufweist als die Schalplatte (2)

## Claims

1. Method for repairing a facing (4) of a formwork panel (2) for concrete, **characterised in that** a film (5) is firmly bonded onto the original facing (4) of the formwork panel (2) to form a new facing.

2. Method according to claim 1, **characterised in that** the formwork panel (2) is part of a framed formwork element (1) comprising a frame (3) and the formwork panel (2), and that the formwork panel (2) remains in the frame (3) for the repair of its facing (4).

3. Method according to claim 1, **characterised in that** the film (5) is applied to the formwork panel (2) in a vacuum or with a vacuum between the film (5) and the formwork panel (2).

4. Method according to claim 3, **characterised in that** the film (5) is applied under pressure on a side of the formwork panel (2) facing away from the formwork panel (2).

5. Method according to claim 3 or 4, **characterised in that** a membrane (8) is arranged on the film (5) on a side of the formwork panel (2) facing away from the film (5), and between which and the formwork panel (2) air is evacuated.

6. Method according to claim 5, **characterised in that** the membrane (8) is heatable.

7. Method according to any one of the preceding claims, **characterised in that** the film (5) is heated prior to placing it on the formwork surface (4).

8. Method according to any one of the preceding claims, **characterised in that** the film (5) is applied to a part of the formwork surface (4).

9. Method according to any one of the preceding claims, **characterised in that** the film (5) is not turned around an edge.

10. Method according to any one of the preceding claims, **characterised in that** the film (5) is welded to the formwork panel (2).

11. Method according to any one of the preceding claims, **characterised in that** the formwork panel (2) and the film (5) are made of plastics with the same melting temperature.

12. Method according to claim 11, **characterised in that** the formwork panel (2) and the film (5) are made of the same plastic.

13. Method according to any one of claims 1 to 10, **characterised in that** the film (5) has a lower melting temperature than the formwork panel (2).

## Revendications

1. Procédé permettant de réparer une surface de coffrage (4) d'un panneau de coffrage (2) pour béton, **caractérisé en ce que** sur la surface de coffrage (4) initiale du panneau de coffrage (2) est déposée par adhésion de matière une feuille (5), qui forme la nouvelle surface de coffrage.

2. Procédé selon la revendication 1, **caractérisé en ce que** le panneau de coffrage (2) est une partie intégrante d'un élément de coffrage en cadre (1) comportant un cadre (3) et le panneau de coffrage (2), et **en ce que** le panneau de coffrage (2) reste dans le cadre (3) pour la réparation de sa surface de coffrage (4).

3. Procédé selon la revendication 1, **caractérisé en ce que** la feuille (5) est déposée sur le panneau de coffrage (2) sous vide ou avec un vide entre la feuille (5) et le panneau de coffrage (2).

4. Procédé selon la revendication 3, **caractérisé en ce que** la feuille (5) est déposée sur le panneau de coffrage (2) sous l'effet d'une pression exercée sur une face opposée au panneau de coffrage (2).

5. Procédé selon la revendication 3 ou 4, **caractérisé en ce qu'**une membrane (8) est déposée sur la feuille (5) sur une face de la feuille (5) opposée au panneau de coffrage (2), le vide étant produit entre celle-ci et le panneau de coffrage (2).

6. Procédé selon la revendication 5, **caractérisé en ce que** la membrane (8) peut être chauffée.

7. Procédé selon l'une quelconque des revendications précédentes, **caractérisé en ce que** la feuille (5) est chauffée avant d'être déposée sur la surface de coffrage (4).

8. Procédé selon l'une quelconque des revendications précédentes, **caractérisé en ce que** la feuille (5) est déposée sur une partie de la surface de coffrage (4).

9. Procédé selon l'une quelconque des revendications précédentes, **caractérisé en ce que** la feuille (5) n'est pas repliée autour d'un bord.

10. Procédé selon l'une quelconque des revendications précédentes, **caractérisé en ce que** la feuille (5) est soudée au panneau de coffrage (2).

11. Procédé selon l'une quelconque des revendications précédentes, **caractérisé en ce que** le panneau de coffrage (2) et la feuille (5) sont réalisés dans des matières plastiques ayant la même température de fusion.

12. Procédé selon la revendication 11, **caractérisé en ce que** le panneau de coffrage (2) et la feuille (5) sont réalisés dans la même matière plastique.

13. Procédé selon l'une quelconque des revendications 1 à 10, **caractérisé en ce que** la feuille (5) possède une température de fusion inférieure à celle du panneau de coffrage (2).
